# EUROPEAN PATENT APPLICATION

(11) **EP 1 458 047 A2**
(43) Date of publication of application: **15.09.2004**
(21) Application number: 03022181.6
(22) Date of filing: 30.09.2003
(51) Int. Cl.: H01M 10/40, H01M 4/58, H01M 10/04, B60L 11/18

(54) **Bipolar battery and electric vehicle**

(30) Priority: 20.11.2002 JP 2002336955
(71) Applicant: NISSAN MOTOR CO., LTD., Yokohama-shi Kanagawa-ken (JP)
(72) Inventor: Fukuzawa, Tatsuhiro, Yokohama-shi Kanagawa-ken (JP); Nemoto, Kouichi, Zushi-shi Kanagawa-ken (JP)
(74) Representative: Hager, Thomas J., Dipl.-Ing.

(57) **Abstract**

In the bipolar battery, any one of a positive electrode active material layer and a negative electrode active material layer is made of a changeable electrode active material, and the other is made of an unchangeable electrode active material. The changeable electrode active material is an active material having a characteristic in which, once a maximum charging capacity of the changeable electrode active material is almost reached during charge, a change in voltage of the changeable electrode active material becomes greater than that before the maximum charging capacity thereof is almost reached, and the unchangeable electrode active material is an active material having a characteristic in which, even when the maximum charging capacity of the changeable electrode active material is almost reached during the charge, a voltage of the unchangeable electrode active material is almost the same as that before the maximum charging capacity of the changeable electrode active material is almost reached.

## Description

### BACKGROUND OF THE INVENTION

### 1. Field of the Invention

The present invention relates to a bipolar battery which prevents overcharge of single cell layers and is capable of charging each of the single cell layers without variations, an assembled battery in which a plurality of the bipolar batteries are connected. Further, the present invention relates to a charge control system which controls charge of the bipolar battery or the assembled battery. Furthermore, the present invention relates to a vehicle on which the bipolar battery, the assembled battery or the charge control system is mounted.

### 2. Description of the Related Art

A chargeable and dischargeable bipolar battery has a construction in which a plurality of single cell layers is connected in series within a battery. When manufacturing this type of bipolar battery, it is impossible to manufacture strictly identical single cell layers. Therefore, charging capacities and internal resistance vary among these single cell layers. Such variations result in different states of charge of the respective single cell layers when charging the bipolar battery.

Specifically, charge of a single cell layer with a small capacity is completed more quickly than the other single cell layers, and this single cell layer is thereafter overcharged as the charging capacity thereof is exceeded. This results in a problem that breakage of a positive electrode active material layer or decomposition of an electrolyte layer occurs in the overcharged single cell layer, causing a local short circuit.

In order to solve this problem, there is a disclosed technology which prevents overcharge of a single cell layer caused by variations in the state of charge among the single cell layers. In this technology, overcharge is prevented by a direct electrical connection between collectors of the single cell layers using leads. These collectors are symmetrically located with respect to a collector located in the middle of an electrode stacked body as a center (see Japanese Patent Application Laid-Open No. 2000-195495).

### SUMMARY OF THE INVENTION

However, in the above technology, overcharge still occurs when both of the single cell layers connected by the lead have small capacities, and breakage of the single cell cannot be avoided. Moreover, it is difficult to apply the connection between the symmetrically located single cell layers using the lead to extremely thin and numerous single cell layers. Thus, manufacture thereof becomes complicated.

The present invention was made in consideration of the above-described problems. It is an object of the present invention to provide a bipolar battery which prevents overcharge of single cell layers and is capable of charging each of the single cell layers without variations, an assembled battery in which a plurality of the bipolar batteries is connected, a charge control system which controls charge of the bipolar battery or the assembled battery, and a vehicle on which the bipolar battery, the assembled battery or the charge control system is mounted.

The first aspect of the present invention provides a bipolar battery, comprising: at least one bipolar electrode in which a positive electrode active material layer is formed on one surface of a collector, and a negative electrode active material layer is formed on another surface of the collector; and at least one electrolyte layer placed between the bipolar electrodes, wherein any one of the positive electrode active material layer and the negative electrode active material layer is made of a changeable electrode active material, and the other is made of an unchangeable electrode active material, the changeable electrode active material is an active material having a characteristic in which, once a maximum charging capacity of the changeable electrode active material is almost reached during charge, a change in voltage of the changeable electrode active material becomes greater than that before the maximum charging capacity thereof is almost reached, and the unchangeable electrode active material is an active material having a characteristic in which, even when the maximum charging capacity of the changeable electrode active material is almost reached during the charge, a voltage of the unchangeable electrode active material is almost the same as that before the maximum charging capacity of the changeable electrode active material is almost reached.

The second aspect of the present invention provides an assembled battery, comprising: a plurality of bipolar battery, the bipolar battery, comprising: at least one bipolar electrode in which a positive electrode active material layer is formed on one surface of a collector, and a negative electrode active material layer is formed on another surface of the collector; and at least one electrolyte layer placed between the bipolar electrodes, wherein any one of the positive electrode active material layer and the negative electrode active material layer is made of a changeable electrode active material, and the other is made of an unchangeable electrode active material, the changeable electrode active material is an active material having a characteristic in which, once a maximum charging capacity of the changeable electrode active material is almost reached during charge, a change in voltage of the changeable electrode active material becomes greater than that before the maximum charging capacity thereof is almost reached, and the unchangeable electrode active material is an active material having a characteristic in which, even when the maximum charging capacity of the changeable electrode active material is almost reached during the charge, a voltage of the unchangeable electrode active material is almost the same as that before the maximum charging capacity of the changeable electrode active material is almost reached.

The third aspect of the present invention provides a charge control system, comprising: a bipolar battery including at least one bipolar electrode in which a positive electrode active material layer is formed on one surface of a collector and a negative electrode active material layer is formed on another surface of the collector, and at least one electrolyte layer placed between the bipolar electrodes; an electric power supply unit which supplies electric power to the bipolar battery; a measuring unit which measures a voltage of the bipolar battery when electric power supply by the electric power supply unit is stopped; and a control unit which controls the supply or stopping of supply of the electric power by the electric power supply unit on the basis of a measurement result by the measuring unit, wherein any one of the positive electrode active material layer and the negative electrode active material layer is made of a changeable electrode active material, and the other is made of an unchangeable electrode active material, the changeable electrode active material is an active material having a characteristic in which, once a maximum charging capacity of the changeable electrode active material is almost reached during charge, a change in voltage of the changeable electrode active material becomes greater than that before the maximum charging capacity thereof is almost reached, and the unchangeable electrode active material is an active material having a characteristic in which, even when the maximum charging capacity of the changeable electrode active material is almost reached during the charge, a voltage of the unchangeable electrode active material is almost the same as that before the maximum charging capacity of the changeable electrode active material is almost reached.

The fourth aspect of the present invention provides a charge control system, comprising: an assembled battery having a bipolar battery including at least one bipolar electrode in which a positive electrode active material layer is formed on one surface of a collector and a negative electrode active material layer is formed on another surface of the collector, and at least one electrolyte layer placed between the bipolar electrodes; an electric power supply unit which supplies electric power to the bipolar battery; a measuring unit which measures a voltage of the bipolar battery when electric power supply by the electric power supply unit is stopped; and a control unit which controls the supply or stopping of supply of the electric power by the electric power supply unit on the basis of a measurement result by the measuring unit, wherein any one of the positive electrode active material layer and the negative electrode active material layer is made of a changeable electrode active material, and the other is made of an unchangeable electrode active material, the changeable electrode active material is an active material having a characteristic in which, once a maximum charging capacity of the changeable electrode active material is almost reached during charge, a change in voltage of the changeable electrode active material becomes greater than that before the maximum charging capacity thereof is almost reached, and the unchangeable electrode active material is an active material having a characteristic in which, even when the maximum charging capacity of the changeable electrode active material is almost reached during the charge, a voltage of the unchangeable electrode active material is almost the same as that before the maximum charging capacity of the changeable electrode active material is almost reached.

The fifth aspect of the present invention provides a vehicle, comprising: a bipolar battery including at least one bipolar electrode in which a positive electrode active material layer is formed on one surface of a collector, and a negative electrode active material layer is formed on another surface of the collector; and at least one electrolyte layer placed between the bipolar electrodes, wherein any one of the positive electrode active material layer and the negative electrode active material layer is made of a changeable electrode active material, and the other is made of an unchangeable electrode active material, the changeable electrode active material is an active material having a characteristic in which, once a maximum charging capacity of the changeable electrode active material is almost reached during charge, a change in voltage of the changeable electrode active material becomes greater than that before the maximum charging capacity thereof is almost reached, and the unchangeable electrode active material is an active material having a characteristic in which, even when the maximum charging capacity of the changeable electrode active material is almost reached during the charge, a voltage of the unchangeable electrode active material is almost the same as that before the maximum charging capacity of the changeable electrode active material is almost reached.

The sixth aspect of the present invention provides a vehicle, comprising: a charge control system comprising: a bipolar battery including at least one bipolar electrode in which a positive electrode active material layer is formed on one surface of a collector and a negative electrode active material layer is formed on another surface of the collector, and at least one electrolyte layer placed between the bipolar electrodes; an electric power supply unit which supplies electric power to the bipolar battery; a measuring unit which measures a voltage of the bipolar battery when electric power supply by the electric power supply unit is stopped; and a control unit which controls the supply or stopping of supply of the electric power by the electric power supply unit on the basis of a measurement result by the measuring unit, wherein any one of the positive electrode active material layer and the negative electrode active material layer is made of a changeable electrode active material, and the other is made of an unchangeable electrode active material, the changeable electrode active material is an active material having a characteristic in which, once a maximum charging capacity of the changeable electrode active material is almost reached during charge, a change in voltage of the changeable electrode active material becomes greater than that before the maximum charging capacity thereof is almost reached, and the unchangeable electrode active material is an active material having a characteristic in which, even when the maximum charging capacity of the changeable electrode active material is almost reached during the charge, a voltage of the unchangeable electrode active material is almost the same as that before the maximum charging capacity of the changeable electrode active material is almost reached.

### BRIEF DESCRIPTION OF THE DRAWINGS

The invention will now be described with reference to the accompanying drawings wherein;
FIG. 1 is a cross-sectional view showing an electrode of a bipolar battery according to the present invention;
FIG. 2 is a cross-sectional view showing a state in which the electrode of the bipolar battery of the present invention is stacked with an electrolyte layer;
FIG. 3 is a cross-sectional view showing the bipolar battery of the present invention;
FIG. 4 is a schematic cross-sectional view showing a construction of the bipolar battery according to the present invention;
FIG. 5 is a graph showing a voltage-charging rate curve of a material used in a positive electrode active material layer;
FIG. 6 is a graph showing a voltage-charging rate curve of a material used in a negative electrode active material layer;
FIG. 7 is a graph showing a voltage-charging rate curve of the positive electrode active material layer, which contains spinel lithium manganate as a changeable electrode active material, and the negative electrode active material layer, which contains lithium titanate as an unchangeable electrode active material;
FIG. 8 is a graph showing a voltage-charging rate curve of a bipolar battery of example 1;
FIG. 9 is a graph showing a voltage-charging rate curve of the positive electrode active material layer, which contains spinel lithium manganate as the unchangeable electrode active material, and the negative electrode active material layer, which contains lithium titanate as the changeable electrode active material;
FIG. 10 is a graph showing a voltage-charging rate curve of a bipolar battery of example 2;
FIG. 11 is a graph showing a voltage-charging rate curve of the positive electrode active material layer, which contains spinel lithium manganate as the changeable electrode active material, and the negative electrode active material layer, which contains graphite as the unchangeable electrode active material;
FIG. 12 is a graph showing a voltage-charging rate curve of a bipolar battery of example 3;
FIG. 13 is a cross-sectional view showing an assembled battery of the present invention;
FIG. 14 is a block diagram showing a charge control system of the present invention;
FIG. 15 is a flow diagram showing a procedure of controlling the charge of the bipolar battery; and
FIG. 16 is a cross-sectional view showing a vehicle of the present invention.

### DETAILED DESCRIPTION OF THE PREFERRED EMBODIMENTS

Hereinafter, description will be made of embodiments of the present invention with reference to the drawings.

### (First Embodiment)

A first embodiment of the present invention is a bipolar battery which prevents overcharge of single cell layers and is capable of charging each of the single cell layers without variations. The following sets forth the case where the bipolar battery is a bipolar lithium ion secondary battery. Hereinafter the bipolar lithium ion secondary battery is simply refered to as a bipolar battery.

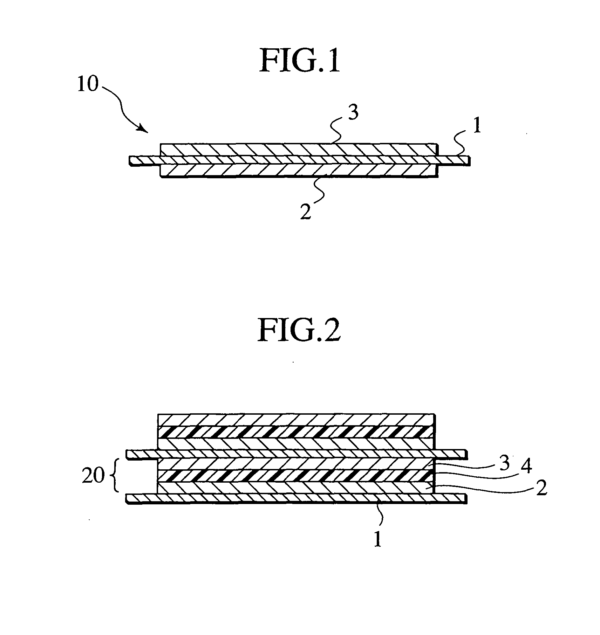

As shown in FIG. 1, a sheet-shaped bipolar electrode 10 which constructs a bipolar battery has a construction in which a positive electrode active material layer 2 is placed on one surface of a collector 1, and a negative electrode active material layer 3 is place on the other side of the collector. In other words, the bipolar electrode 10 has a construction in which the negative electrode active material layer 3, the collector 1 and the positive electrode active material layer 2 are stacked in this order.

As shown in FIG. 2, the bipolar electrodes 10 having the abovementioned construction are placed so that all the stacking orders thereof are the same, and are stacked while sandwiching a polymer electrolyte layer 4 therebetween. By filling the polymer electrolyte layers 4 between the positive and negative electrode active material layers 2 and 3, smooth ionic conduction is realized and the power of the bipolar battery as a whole is improved.

Since the polymer electrolyte layer 4 is a solid layer, no liquid leakage of an electrolyte occurs and no construction for preventing the electrolyte from being dissolved is required. Thus, the construction of the bipolar battery can be simplified. Further, since the polymer electrolyte layer 4 is a solid layer, it has strength against some overcharge and is difficult to decompose, compared with a liquid layer.

A combined layer of the negative electrode active material layer 3, the polymer electrolyte layer 4 and the positive electrode active material layer 2, sandwiched between the collectors 1, is called a single cell layer 20.

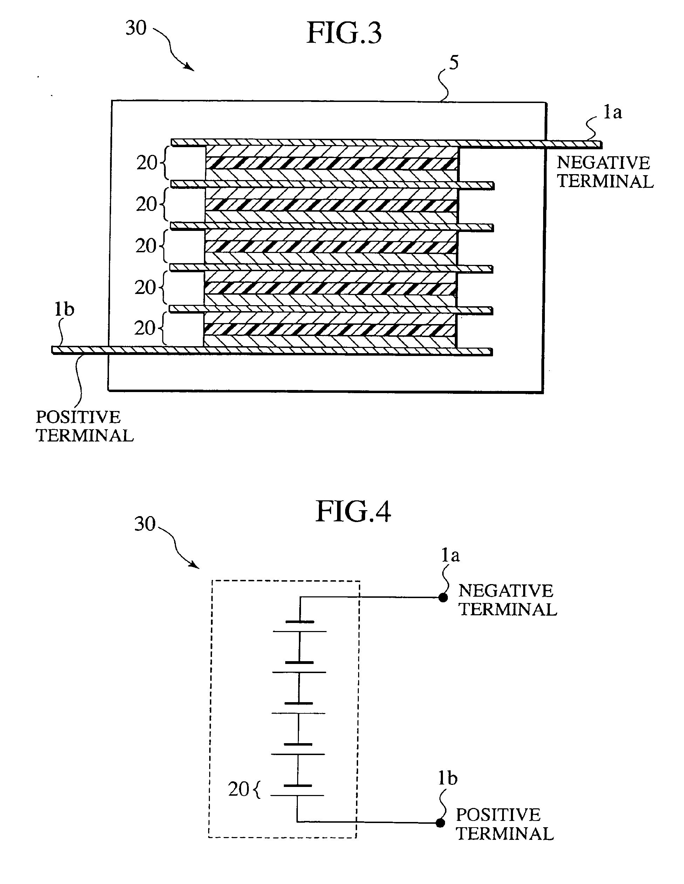

As shown in FIG. 3, the stacked bipolar electrodes 10 sandwiching the polymer electrolyte layers 4 therebetween as above is entirely encapsulated within an outer package 5 except for the collectors 1 on both ends of the electrode stacked body, which are led out as a negative terminal 1a and a positive terminal 1b. Thus, a bipolar battery 30 is formed.

Conceptually illustrating the bipolar battery 30 as shown in FIG. 4, the bipolar battery 30 has a plurality of stacked single cell layers 20 therein. This means that the bipolar battery 30 has the same construction as a construction in which a plurality of cells is connected in series. Therefore, when charging the bipolar battery 30, the negative terminal 1a and the positive terminal 1b are connected to a power source, and all of the single cell layers 20 are respectively charged at the same time.

In that event, variations in charging capacity of the respective single cell layers 20 result in a state where the charge of the single cell layers 20 with smaller charging capacities is completed quickly, and the charge of those with larger charging capacities is not yet completed. Since the charge of the bipolar battery 30 continues until the charge of the single cell layers 20 which have not yet been charged completely, is completed, therefore, current flows into the completely charged single cell layers 20 as well, and thereby overcharge thereof occurs. In order to prevent this, there is a method of measuring the states of charge or the charging rates of the single cell layers one by one. However, measuring every single charging capacity of each of the single cell layers 20 requires enormous cost and time. Application of this method is therefore not practical.

Considering the above, the present invention provides a bipolar battery 30 which is capable of preventing the overcharge of the single cell layers without measuring the states of charge of each of the single cell layers 20. In order to prevent overcharge, the positive electrode active material layer 2 and the negative electrode active material layer 3 which construct the single cell layer 20 have the following characteristics in the bipolar battery 30 of the present invention.

Description is provided hereinbelow regarding the positive electrode active material layer 2 and the negative electrode active material layer 3 of the bipolar battery 30 of the present invention.

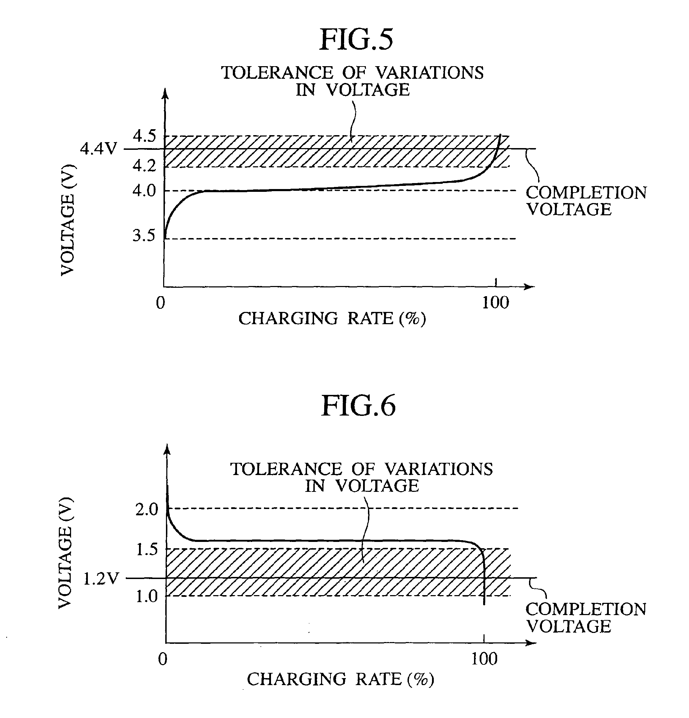

The positive electrode active material layer 2 is made of spinel lithium manganate (LiMn₂O₄) and the negative electrode material layer 3 is made of lithium titanate (Li₄Ti₅O₁₂). It is known that the spinel lithium manganate is a material which follows a voltage-charging rate curve shown in FIG. 5. The voltage-charging rate curve is a curve which shows an amount of voltage flowing in spinel lithium manganate with respect to a charging rate (%).

As shown in FIG. 5, when used for the positive electrode active material layer 2, spinel lithium manganate has a characteristic that, at the moment when the charging rate reaches 100%, the voltage greatly increases compared with the voltage before. Therefore, as the voltage rapidly increases when the charging rate reaches 100%, the charging rate does not increase much from 100%. This is a characteristic whereby the charging rate is unlikely to increase even when the voltage becomes even higher after the charge is finished as the charging rate reaches 100%, and thereby, overcharge can be prevented.

Even if charging capacities of the respective single cell layers 20 vary, and the voltage becomes even higher due to charge to the other single cell layers 20 after the charging rates of some of the single cell layers 20 reach 100%, overcharge does not occur with the voltage within a certain range when the aforementioned characteristic is utilized. Thus, breakage of the completely charged single cell layers 20 can be prevented. Specifically, variations in voltage among single cell layers 20 are acceptable.

A tolerance that variations in voltage are acceptable is within a range from 4.2V to 4.5V in the case of spinel lithium manganate, and the charging rate hardly changes even when the voltage rises by 0.1V within this tolerance. For example, if the voltage rises by 0.1V when the charging rate is about 50%, the charging rate increases by as much as about 30%. In comparison with this, it is understood that the voltage increase of 0.1V within the tolerance has little influence on the charging rate.

Using such a characteristic of spinel lithium manganate, the single cell layers 20 are not overcharged with the voltage within the tolerance. In contrast, by the time when each of the single cell layers 20 is charged until it becomes capable of discharging at the voltage within the tolerance, the charging rate of each of the single cell layers 20 has reached 100%, and thereby the charge of the bipolar battery 30 can be considered as being completed. The voltage within the tolerance is set as a completion voltage with which completion of the charge of the single cell layers 20 is recognized, and can be used as a standard in judging completion of the charge. The details thereof will be described later.

Meanwhile, as shown in FIG. 6, lithium titanate has a characteristic that, at the moment when the charging rate reaches about 100%, the voltage is greatly decreased compared with the voltage before, when used for the negative electrode active material layer 3. The difference between lithium titanate and the material of the positive electrode active material layer 2 shown in FIG. 5 is that the voltage is greatly decreased when the charging rate reaches about 100%. However, the increase and decrease of the voltage is merely a difference between applications to the positive electrode active material layer 2 or to the negative electrode active material layer 3, and lithium titanate has no difference from spinel lithium manganate in terms of the characteristic that the change of the voltage is little after the charging rate exceeds about 100%.

Accordingly, even when there are some variations in voltage among the respective single cell layers 20, the use of lithium titanate for the negative electrode active material layer 3 to utilize this characteristic can prevent overcharge due to the variations, and thereby breakage and short circuit of the single cell layers 20 can be prevented. A tolerance in which the voltage variations are acceptable is within a range from 1.0V to 1.5V in the case of lithium titanate.

As described above, by using the foregoing spinel lithium manganate and lithium titanate for the positive and negative electrode active material layers 2 and 3, respectively, the characteristics that the voltage greatly changes when the charging rate reaches about 100% can be utilized for the bipolar battery 30. In virtue of this, the respective single cell layers 20, even with different charging capacities, can have charging rates of about 100% by being charged until power within the foregoing tolerance is obtained. Thus, the single cell layers 20 are not overcharged even when the voltages vary within the tolerances.

In the foregoing, the characteristics of the positive and negative electrode active material layers 2 and 3 were individually described. However, in practice, when the single cell is constructed applying the spinel lithium manganate and the lithium titanate to the positive and negative electrode active material layers 2 and 3, respectively, the characteristics of these materials are combined and appears as the overall characteristic of the bipolar battery 30. Further, the overall characteristic of the bipolar battery 30 changes depending on the applied amounts of the materials.

Next, the overall characteristic of the bipolar battery 30 when actually applying the foregoing spinel lithium manganate and the lithium titanate will be specifically described in Examples 1 to 3. Note that the other materials contained in the positive and negative electrode active material layer 2 and 3 and the electrolyte layer 4 will be collectively described at the end of Example 3, and the description thereof is omitted below.

### (Example 1)

In Example 1, the positive electrode active material layer 2 contains the spinel lithium manganate as a changeable electrode active material, and the negative electrode active material layer 3 contains lithium titanate as an unchangeable electrode active material. The changeable electrode active material is an active material having a characteristic in which, once a maximum charging capacity of the changeable electrode active material is almost reached during charge, a change in voltage of the changeable electrode active material becomes greater than that before the maximum charging capacity thereof is almost reached, and the unchangeable electrode active material is an active material having a characteristic in which, even when the maximum charging capacity of the changeable electrode active material is almost reached during the charge, a voltage of the unchangeable electrode active material is almost the same as that before the maximum charging capacity of the changeable electrode active material is almost reached. In other words, the changeable electrode active material is an active material having a characteristic in which, once a charging rate of the changeable electrode active material reaches about 100% during charge, a change in the voltage of the changeable electrode active material becomes greater than that before the charging rate thereof reaches about 100%, and the unchangeable electrode active material is an active material having a characteristic in which, even when the charging rate of the changeable electrode active material reaches about 100% during charge, a voltage of the unchangeable electrode active material is almost the same as that before the charging rate of the changeable electrode active material reaches about 100%. As a result of these, the characteristic of the changeable electrode active material appears as the overall characteristic of the bipolar battery 30. The definitions of the changeable and unchangeable electrode active materials are the same in Examples 2 and 3 below.

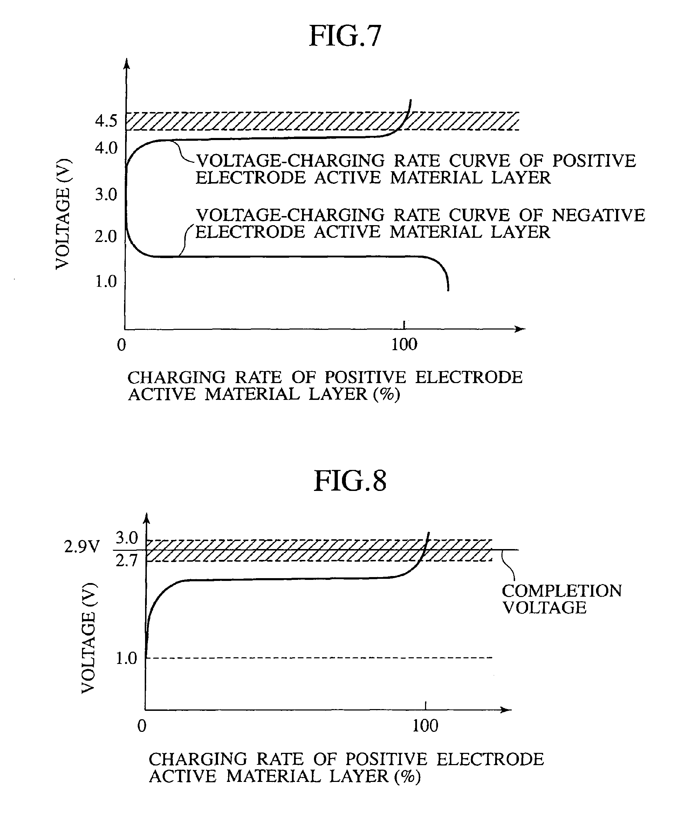

In Example 1, as shown in FIG. 7, the positive and negative electrode active material layers 2 and 3 are adjusted such that the charging capacity of the negative electrode active material layer 3 as the unchangeable electrode active material becomes 120% of that of the positive electrode active material layer 2 as the changeable electrode active material. Here, the charging capacity of the positive electrode active material layer 2 or the negative electrode active material layer 3 is uniquely decided depending on the content of the spinel lithium manganate or the lithium titanate. Therefore, by adjusting the contents of these materials, the charging capacity of the negative electrode active material layer 3 can be set to 120% of that of the positive electrode active material layer 2.

In FIGS. 7 and 8, voltage is plotted on the vertical axis and the charging rate of the positive electrode active material layer 2 is plotted on the horizontal axis. Hence, at the point when the charging rate of the positive electrode active material layer 2 reaches 100%, the voltage rapidly increases in the voltage-charging rate curve of the positive electrode active material layer 2, whereas the voltage-charging rate curve of the negative electrode active material layer 3 shows no change. Thereafter, the voltage-charging rate curve of the negative electrode active material layer 3 rapidly decreases at the point when the charging rate of the positive electrode active material layer 2 reaches 120%, that is, the point when the charging rate of the negative electrode material layer 3 reaches 100%.

When the positive and negative electrode active material layers 2 and 3 are combined as constituents of each of the single cell layers 20, the single cell layers 20 show a characteristic of the voltage-charging rate curve shown in FIG. 8.

As shown in FIG. 8, the voltage-charging rate curve of the whole bipolar battery 30 has a similar characteristic to the voltage-charging rate curve of the positive electrode active material layer 2, apart from that the overall voltage is lower. This is because the voltage rapidly changes once the charging rate of the positive electrode active material layer 2 reaches about 100%, whereas the voltage of the negative electrode active material layer 3 does not change. Thus, the characteristic of the positive electrode active material layer 2 that the voltage rapidly changes also appears after the two characteristics are combined.

Referring to FIG. 8, when the charge is continued until the voltage reaches the tolerance from 2.7V to 3.0V, the charging rate is about 100%. Therefore, if the completion voltage used as a standard of charge completion of the single cell layer 20 is set within the tolerance, for example, 2.9V, the charge of the single cell layer 20 can be considered as completed when it is charged until the voltage reaches 2.9V.

When each of the single cell layers 20 is observed, the voltage thereof may be different from 2.9V while being charged. Nevertheless, if the voltages vary within the tolerance, the charging rates are about 100%. Once the charge is stopped, the charging rates converge to the maximum charging capacity, that is, the charging rates converge to the completion voltage. Therefore, when each of the single cell layers 20 discharges, output power of 2.9V is obtained from each of these single cell layers 20.

Accordingly, for a condition when actually judging the completion of the charge, it is possible to use a fact that the power, obtained by multiplying the number of single cell layers 20 in the bipolar battery 30 by 2.9V that is power from each of the single cell layers 20 when the charging rate is 100%, is obtained as the overall power of the bipolar battery 30. In Example 1, if five of the single cell layers 20 are stacked in the bipolar battery 30, the charge is continued until the power of 2.9(v) x 5(layers) = 14.5(V) is obtained as the overall power of the bipolar battery 30, and thereby all of the single cell layers 20 can be charged without variations until the bipolar battery 30 is charged to the maximum charging capacities thereof.

### (Example 2)

In Example 2, the positive electrode active material layer 2 contains the spinel lithium manganate as the unchangeable electrode active material, and the negative electrode active material layer 3 contains lithium titanium as the changeable electrode active material. The spinel lithium manganate contained as the changeable electrode active material in Example 1 is contained as the unchangeable electrode active material in Example 2. The lithium titanate contained as the unchangeable electrode active material in Example 1 is contained as the changeable electrode active material in Example 2. As a result, the characteristic of the negative electrode active material layer 3 appears as the overall characteristic of the bipolar battery 30.

In Example 2, since the negative electrode active material layer 3 is changeable electrode active material, the positive and negative electrode active material layers 2 and 3 are adjusted such that, in contrast to Example 1, the charging capacity of the positive electrode active material layer 2 is 120% of that of the negative electrode active material layer 3.

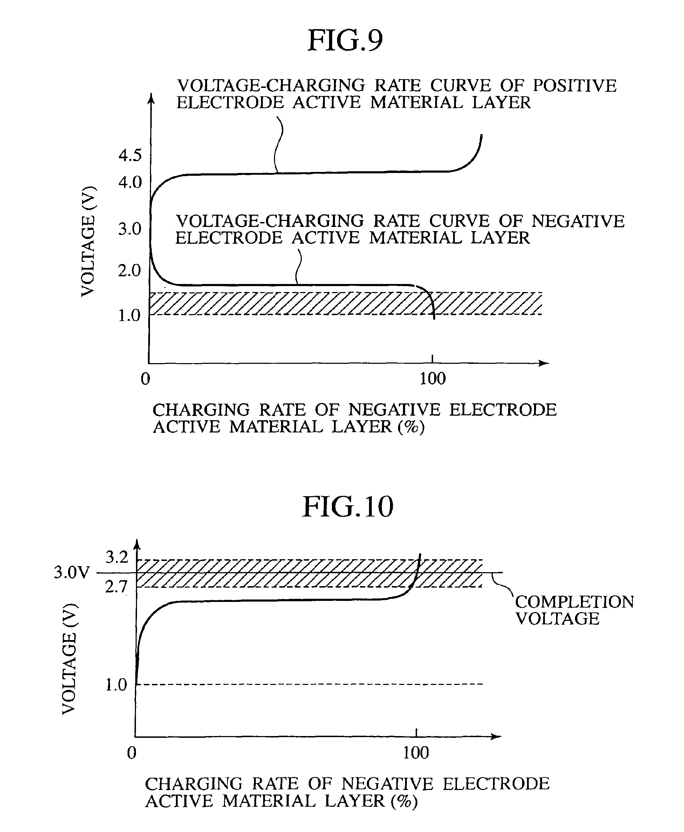

In FIGS. 9 and 10, voltage is plotted on the vertical axis and the charging rate of the negative electrode active material layer 3 is plotted on the horizontal axis. Therefore, at the point when the charging rate reaches 100%, the voltage of the voltage-charging rate curve of the negative electrode active material layer 3 rapidly decreases, whereas the voltage-charging rate curve of the positive electrode active material layer 2 shows no change. Thereafter, the voltage-charging rate curve of the positive electrode active material layer 2 rapidly increases at the point when the charging rate of the negative electrode active material layer 3 reaches 120%.

When these positive and negative electrode active material layers 2 and 3 are combined as constituents of each of the single cell layers 20, the single cell layers 20 as a whole show a characteristic of voltage-charging rate curve shown in FIG. 10. Here, the voltage rapidly decreases near the charging rate of 100% in the negative electrode active material layer 3. However, the rapid decrease of the voltage of the negative electrode active material layer 3 results in a rapid increase of the voltage of the whole bipolar battery 3 near the charging rate of 100%. Therefore, as shown in FIG. 10, the characteristic of the voltage-charging rate curve in which the voltage increases near 100% is obtained.

Referring to FIG. 10, when the charge is continued until the voltage reaches the tolerance from 2.7V to 3.2V, the charging rate is about 100%. Therefore, if the completion voltage used as the standard of charge completion of each of the single cell layers 20 is set within the tolerance, for example, 3.0V, the charge of the single cell layer 20 can be considered as completed when the single cell layer 20 is charged until the voltage reaches 3.0V.

When each of the single cell layers 20 is observed, the voltage thereof may be different from 3.0V while being charged. Nevertheless, if the voltages vary within the tolerance, the charging rates are about 100%. Once the charge is stopped, the charging rates converge to the maximum charging capacity, that is, the charging rates converge to the completion voltage. Therefore, when each of the single cell layers 20 discharges, output power of 3.0V is obtained from each of these single cell layers 20.

Accordingly, for a condition when actually judging the completion of the charge, it is possible to use a fact that the power, obtained by multiplying the number of single cell layers 20 in the bipolar battery 30 by 3.0V that is power from each of the single cell layers 20 when the charging rate is 100%, is obtained as the overall power of the bipolar battery 30. In Example 2, if five of the single cell layers 20 are stacked in the bipolar battery 30, the charge is continued until the power of 3.0(v) x 5(layers) = 15.0(V) is obtained as the overall power of the bipolar battery 30, and thereby all of the single cell layers 20 can be charged without variations until the bipolar battery 30 is charged to the maximum charging capacities thereof.

### (Example 3)

In the Example 3, the positive electrode active material layer 2 contains the spinel lithium manganate as the changeable electrode active electrode, and the negative electrode active material layer 3 contains graphite as the unchangeable electrode active material. In the first embodiment described earlier, description was given regarding the present invention realized by the use of lithium titanate for the negative electrode, but the lithium titanate is replaced by graphite in Example 3. In the case of replacing with graphite, the same effects as Examples 1 and 2 can also be obtained.

In Example 3, the positive and negative electrode active material layers 2 and 3 are adjusted such that the charging capacity of the negative electrode active material layer 3 as the unchangeable electrode active material is 120% of that of the positive electrode active material layer 2 as the changeable electrode active material.

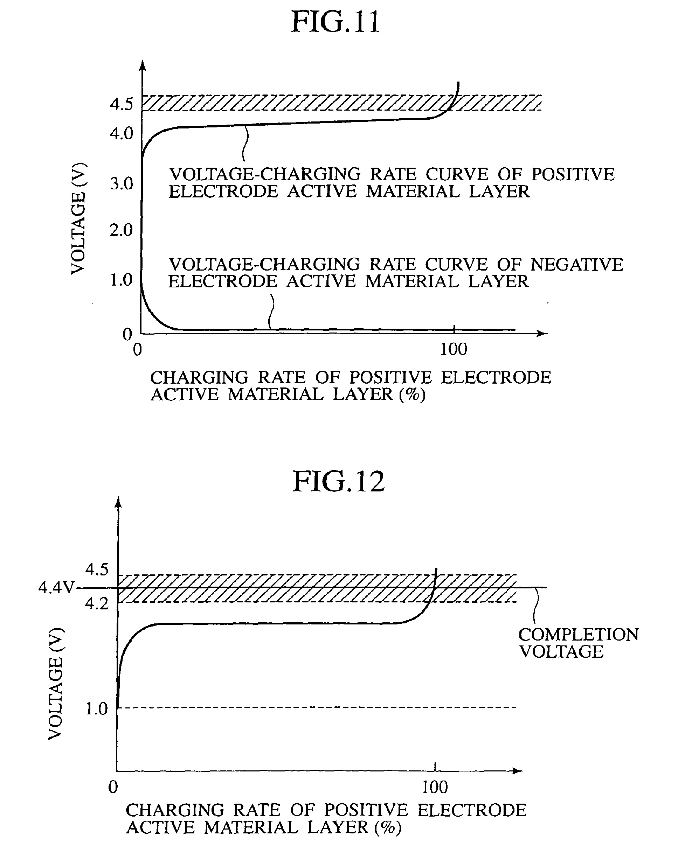

In FIGS. 11 and 12, voltage is plotted on the vertical axis and the charging rate of the positive electrode active material layer 2 is plotted on the horizontal axis. Therefore, at the point when the charging rate reaches 100%, the voltage-charging rate curve of the positive electrode active material layer 2 rapidly increases, whereas that of the negative electrode active material layer 3 shows no change. Thereafter, at the point when the charging rate of the positive electrode active material layer 2 reaches 120%, the voltage-charging rate curve of the negative electrode active material layer 3 rapidly decreases.

When these positive and negative electrode active material layers 2 and 3 are combined as constituents of each of the single cell layers 20, the single cell layers 20 as a whole show the characteristic of the voltage-charging rate curve as shown in FIG. 12.

Referring to FIG. 12, if the charge is continued until the voltage reaches the tolerance from 4.2V to 4.5V, the charging rate is about 100%. Therefore, if the completion voltage used as the standard of charge completion of the single cell layer 20 is set within this tolerance, for example, 4.4V, the charge of the single cell layer 20 can be considered as completed when the charge thereof is continued until the voltage reaches 4.4V.

When each of the single cell layers 20 is observed, the voltage thereof may be different from 4.4V while being charged. Nevertheless, if the voltages vary within the tolerance, the charging rates are about 100%. Once the charge is stopped, the charging rates converge to the maximum charging capacity, that is, the charging rates converge to the completion voltage. Therefore, when each of the single cell layers 20 discharges, output power of 4.4V is obtained from each of these single cell layers 20.

Accordingly, for a condition when actually judging the completion of the charge, it is possible to use a fact that the power, obtained by multiplying the number of single cell layers 20 in the bipolar battery 30 by 4.4V that is power from each of the single cell layers 20 when the charging rate is 100%, is obtained as the overall power of the bipolar battery 30. In Example 3, if five of the single cell layers 20 are stacked in the bipolar battery 30, the charge is continued until the power of 4.4(v) x 5(layers) = 22.0(V) is obtained as the overall power of the bipolar battery 30, and thereby all of the single cell layers 20 can be charged without variations until the bipolar battery 30 is charged to the maximum charging capacities thereof.

In Examples 1 to 3, description was given regarding the case where the charging capacity of the unchangeable electrode active material is 120% of that of the changeable electrode active material with which the charging rate reaches 100% first and then the voltage greatly changes, so that the voltage does not change so much even when the charging rate of the changeable electrode active material reaches 100%. However, the present invention is not limited thereto. Any cases are applicable as long as the charging rate of the unchangeable electrode active material does not reach 100% and no change is seen in the voltage when the charging rate of the changeable electrode active material reaches 100%. Specifically, 110% or more of the charging capacity of the negative electrode active material layer 3 as the unchangeable electrode active material relative to the positive electrode active material layer 2 as the changeable electrode active material is sufficient.

As described in the foregoing, the changeable electrode active material and the unchangeable electrode active material are used in the bipolar battery 30 of the present invention. The changeable electrode active material has the characteristic in which, once a maximum charging capacity of the changeable electrode active material is almost reached during charge, a change in voltage of the changeable electrode active material becomes greater than that before the maximum charging capacity thereof is almost reached. The unchangeable electrode active material has the characteristic that, even when the maximum charging capacity of the changeable electrode active material is almost reached during the charge, a voltage of the unchangeable electrode active material is almost the same as that before the maximum charging capacity of the changeable electrode active material is almost reached. By using these materials for the positive and negative electrode active material layers 2 and 3, the bipolar battery 30 itself can have the characteristic that, once a maximum charging capacity of the bipolar battery 30 is almost reached during charge, a change in voltage of the bipolar battery 30 becomes greater than that before the maximum charging capacity thereof is almost reached.

Accordingly, in charging the bipolar battery 30 having this characteristic, the single cell layers 20 are uniformly charged by charging them so as to have a completion voltage within the tolerance, even when charging capacities of the respective single cell layers 20 vary. Therefore, charging variation can be prevented. Moreover, there is almost no increase in the charging rate even if the voltage is different from the completion voltage, as long as the voltage is within the tolerance. Thus, breakage of the single cell layers 20 due to overcharge thereof can be prevented.

Furthermore, the overcharge can be prevented by the properties of the materials contained in the positive and negative electrode active material layers 2 and 3. Therefore, it is not required to provide the bipolar battery 30 with a special construction, thus enabling easy and inexpensive manufacturing thereof.

The bipolar battery 30 of the present invention has been described above. Next, a brief description is given of the ingredient of the collector 1, the electrode active material layer 2, the negative electrode active material layer 3, and the electrolysis layer 4 in the bipolar battery 30 of the present invention. But the present invention should not be limited to these.

### (Collector)

The collector which can be used in the present invention is not particularly limited, and for example, an aluminum foil, a stainless steel foil, a clad material of nickel and aluminum, a clad material of copper and aluminum, or a plated material of a combination of these metals can be preferably used. Alternatively, a collector having a metal surface covered with aluminum may be used. In other words, a collector, in which the surface of the metal such as copper, titanium, nickel, stainless steel and alloy thereof is covered with aluminum, may be used. If the surface material is aluminum, the electrode active material layer having excellent mechanical strength can be prepared even when including the solid polymer electrolyte. In some cases, a collector composed of two or more metal foils bonded together may be used. In the light of corrosion resistance, manufacturability, and cost efficiency, it is preferable to use an aluminum foil as the collector. The thickness of the collector is not particularly limited but is usually about 1 to 100 µm.

The collectors 1a and 1b which function as the terminal are similarly constituted by the above-mentioned material.

### (Positive Electrode Active Material Layer)

The positive electrode active material layer contains positive electrode active material and a solid polymer electrolyte. In addition, lithium salt to increase ion conductivity and a conductive material to increase electron conductivity can be included.

As the positive electrode active material, Li-Mn based composite oxide such as spinel LiMn₂O₄ as mentioned above can be used. Further, examples thereof include LiFePO₄.

Preferably, the diameter of the positive electrode active material particles is smaller than that of the particles generally used in the lithium ion battery with a liquid electrolyte in order to reduce the electrode resistance of the bipolar battery. Specifically, the preferable mean particle size of the positive electrode active material is usually about 0.1 to 10 *µ*m.

The solid polymer electrolyte is not particularly limited as long as the polymer has ion conductivity. Examples of the polymer with ion conductivity include polyethylene oxide (PEO), polypropylene oxide (PPO), and a copolymer thereof. Such a polyalkylene oxide based polymer can dissolve well lithium salts such as LiBF₄, LiPF₆, LiN(SO₂CF₃)₂, and LiN(SO₂C₂F₅)₂. Moreover, by forming a cross-linking structure, excellent mechanical strength is developed. In the present invention, the solid polymer electrolyte is contained in at least one of the positive and negative electrode layers. However, to improve the battery properties of the bipolar battery, it is preferable that the solid polymer electrolyte is contained in both.

As the lithium salt, LiBF₄, LiPF₆, LiN(SO₂CF₃)₂, LiN(SO₂C₂F₅)₂, mixtures thereof, and the like can be used, but the lithium salt is not limited to these.

The conductive material can be acetylene black, carbon black, graphite, or the like, but is not limited to these.

The blending amount of positive electrode active material, solid polymer electrolyte, lithium salt, and conductive material should be determined taking into consideration the intended use (prioritizing output power, energy, etc.) of the battery and the ion conductivity. For example, if the blending amount of the solid polymer electrolyte in the positive electrode active material layer is excessively small, the resistance to ion conduction and diffusion increases within the positive electrode active material layer and reduces the battery performance. In contrast, if the blending amount of solid polymer electrolyte in the positive electrode active material layer is excessively large, the energy density of the battery is reduced. Accordingly, the amount of solid polymer electrolyte is determined taking into consideration these factors so as to be appropriate to the intended use.

Herein, specific consideration will be given to the case of manufacturing the bipolar battery giving priority to the battery reactivity by using a solid polymer electrolyte (ion conductivity: 10⁻⁵ to 10⁻⁴ S/cm) of a current level. In order to obtain the bipolar battery with such a characteristic, the resistance to ion conduction between the active material particles is maintained relatively low by increasing the conductive material or reducing the bulk density of the active material. Simultaneously, the voids are increased and filled with the solid polymer electrolyte. The proportion of the solid polymer electrolyte is preferably increased by such a process.

The thickness of the positive electrode active material layer is not particularly limited and determined taking into consideration the intended use of the battery and the ion conductivity, as described in terms of the blending amount. The thickness of the general positive electrode active material layer is about 10 to 500 µm.

### (Negative Electrode Active Material Layer)

The negative electrode active material layer contains negative electrode active material and solid polymer electrolyte. In addition, a lithium salt to increase the ion conductivity, a conductive material to increase the electron conductivity, N-methyl-2-pyrrolidone (NMP) to adjust slurry viscosity, azobisisobutyronitrile (AIBN) as a polymerization initiator, and the like can be included. The negative electrode active material layer has basically the same contents as described in terms of the positive electrode active material layer other than the types of the negative electrode active material, and description thereof is omitted.

As the negative electrode active material, negative electrode active material used also in the liquid lithium ion battery can be used. However, since the bipolar battery of the present invention uses the solid polymer electrolyte, in consideration of reactivity in the solid polymer electrolyte, the negative electrode active material are preferably carbon, or a composite oxide of metal and lithium. More preferably, the negative electrode active material are carbon, or a composite oxide of transition metal and lithium, and still more preferably, a composite oxide of titanium and lithium such as lithium titanate.

By using carbon, or a composite oxide of transition metal and lithium as the negative electrode active material, the reactivity and the cycle durability of the bipolar battery can be improved, and the bipolar battery can be made at low costs.

### (Electrolyte Layer)

The electrolyte layer is constituted of a polymer having ion conductivity. The material thereof is not limited as long as the ion conductivity is provided. In order to prevent liquid leakage, it is preferable to use a solid electrolyte. By using the solid electrolyte as the electrolyte layer, it is not required to provide the bipolar battery with a special construction for preventing liquid leakage, thus enabling a simple structure thereof.

Examples of the solid electrolyte include a solid polymer electrolyte such as polyethylene oxide (PEO), polypropylene oxide (PPO), and a copolymer thereof. In addition, lithium salt to increase the ion conductivity can be contained in the solid polymer electrolyte. As the lithium salt, LiBF₄, LiPF₆, LiN(SO₂CF₃)₂, LiN(SO₂C₂F₅)₂, mixtures thereof, and the like can be used, but the lithium salt is not limited to these. A polyalkylene oxide based polymer such as PEO and PPO can dissolve well lithium salts such as LiBF₄, LiPF₆, LiN(SO₂CF₃)₂, and LiN(SO₂C₂F₅)₂. Moreover, by forming a cross-linking structure, excellent mechanical strength is developed.

The solid polymer electrolyte can be contained in the solid polymer electrolyte layer, the positive electrode active material layer, and the negative electrode active material layer. The same solid polymer electrolyte may be used or a different solid polymer electrolyte may be used for each layer.

### (Second Embodiment)

A second embodiment of the present invention is an assembled battery in which a plurality of the bipolar batteries 30 of the first embodiment is connected.

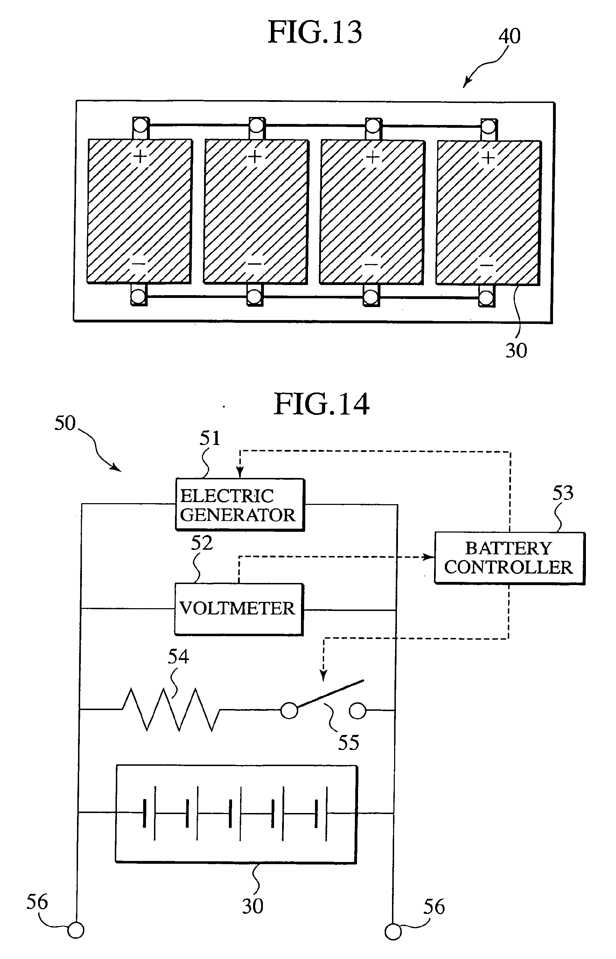

As shown in FIG. 13, the plurality of bipolar batteries 30 shown in the first embodiment is prepared and connected in parallel by connecting positive electrode terminals thereof to each other and negative electrode terminals thereof to each other. Thus, the assembled battery 40 having the aforementioned effects and a long life can be obtained.

As mentioned above, the assembled battery 40 of the present invention can be formed by connecting the bipolar batteries 30 in parallel in a simple construction.

The assembled battery 40 is formed by the plurality of bipolar batteries 30. Therefore, even when a defective bipolar battery 30 is found therein, the rest of the good batteries can be used by merely replacing the defective one, which is highly cost effective.

The figure shows only the case of connecting the bipolar batteries 30 in parallel. However, the negative electrode terminal of the bipolar battery and the positive electrode terminal of another bipolar battery are continuously connected, and the bipolar batteries 30 are connected to each other in series, thus forming the assembled battery. By connecting the bipolar batteries 30 in series, the assembled battery having the aforementioned effects and high power can be obtained.

### (Third Embodiment)

The third embodiment of the present invention is a charge control system which controls the charge of the bipolar battery 30 of the first embodiment or the assembled battery 40 of the second embodiment. This charge control system includes an electric power supply unit (electric power supply means) which supplies or stops supplying electric power to the bipolar batteries 30 or the assembled battery 40, a measuring unit (measuring means) which measures the voltage of the bipolar battery 30 or the assembled battery 40 when the electric power supply unit stops supplying electric power, and a control unit (control means) which controls the supply and stop of supply of electric power by the electric power supply unit based on a measurement result by the measuring unit.

The charge control system of the present invention is a system which is capable of charging the bipolar battery 30 of the first embodiment or the assembled battery 40 of the second embodiment to about 100% so as not to cause variations in the state of charge among the single cell layers 20 therein. The construction of the charge control system is shown in FIG. 14.

As shown in FIG. 14, the charge control system 50 of the present invention includes the bipolar battery 30, an electric generator 51 as the electric power supply unit, a voltmeter 52 as the measuring unit, a battery controller 53 as the control unit, a resistor 54 and a switch 55.

The bipolar battery 30 is the same as the battery described in the first embodiment, and has the characteristic of the voltage-charging rate curves shown in FIGs. 8, 10 and 12.

The electric generator 51 is connected to the battery controller 53, and supplies or stops supplying electric power to the bipolar battery 30 by the control of the battery controller 53. The voltmeter 52 measures the voltage on both ends of the resistor 54, that is, the voltage of the bipolar battery 30, in the condition in which the switch 55 is on and the power supply by the electric generator 51 is stopped.

The battery controller 53 monitors the measurement result of the voltmeter 52 and controls the electric generator 51 and the switch 55 based on the result.

The resistor 54 is provided for bypassing currents from bipolar battery 30 when the switch is on. The switch 55 is connected to the battery controller 53, and controlled to be turned on/off as appropriate. The bipolar battery 30 is provided with an output terminal 56, which is connected to an external load.

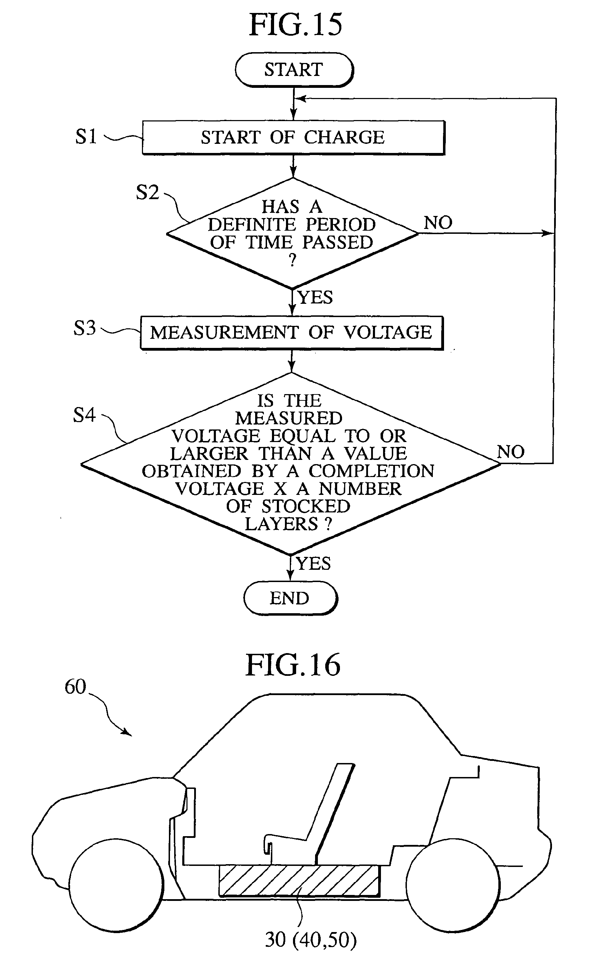

Next, a procedure of controlling the charge of the bipolar battery 30 using the aforementioned charging control system 50 will be specifically described with reference to FIG. 15.

First of all, the charge of the bipolar battery 30 is started (step S1). Here, specific operations of the respective constituents are as follows. The battery controller 53 controls the switch 55 to be turned off, and further controls the electric generator 51 to supply electric power to the bipolar battery 30.

Next, the time since the start of charge is measured, and whether or not a definite period of time has elapsed is judged (step S2). The measurement of the time is realized by a timer in the battery controller 53, and whether or not the certain period of time has elapsed is judged by the battery controller 53. If the certain period of time has not elapsed (step S2: NO), the procedure returns to step S1, and the charge is continued until the certain period of time has elapsed.

When the certain period of time has elapsed (step S2: YES), the voltage of the bipolar battery 30 is measured (step S3). Here, when the voltage is measured, the battery controller 53 controls the electric generator 51 to stop the electric power supply to the bipolar battery 30, and further controls the switch 55 to be turned on. In this manner, a closed circuit of the bipolar battery 30 and the resistor 54 is formed, and currents flow from the bipolar battery 30 to the resistor 54. Thereafter, the voltmeter 52 can measure the voltage of the bipolar battery 30 by measuring the voltage on both ends of the resistor 54.

Next, it is judged whether or not the measured voltage is equal to or larger than the value obtained by multiplying the completion voltage of the single cell layer by the number of the single cell layers in the bipolar battery 30 (step S4). The completion voltage is decided for each of the single cell layers 20 in advance and stored in the battery controller 53. For example, in Example 1 of the first embodiment described earlier, the completion voltage is 2.9V within the tolerance. If the number of the single cell layers 20 stacked in the bipolar battery 30 is five, the battery controller 53 judges whether or not the measured voltage is equal to or larger than 2.9(V) x 5 (layers) = 14.5(V).

When the measured voltage is not equal to or larger than the voltage obtained by the completion voltage x the number of stacked layers (step S4: NO), the procedure returns to step S1 and the charge is continued. When the measured voltage is equal to or larger than the voltage obtained by the completion voltage x the number of stacked layers (step S4: YES), all of the single cell layers 20 are charged without variations, thus finishing the charge.

As described so far, the charge control system 50 judges the completion or incompletion of the charge, using the voltage equal to the completion voltage x the number of stacked layers of the single cell layers 20 as the standard. Regardless of the states of charge of the respective single cell layers 20, the voltage equal to the completion voltage x the number of stacked layers can be used as the standard for the single cell layers. This is because, as described in the first embodiment, the voltage greatly changes after the single cell layer 20 is almost charged to the maximum charging capacity thereof, and, In contrast, the charging rate shows almost no change when the voltage increases within the predetermined tolerance, thereby causing no overcharge. In other words, if the single cell layer 20 is charged within the tolerance, the discharging power of the single cell layer 20 becomes almost equal to the completion voltage. Thus, if the charge of all the single cell layers 20 is completed, each of the single cell layers 20 outputs the completion voltage. Therefore, the power of the whole bipolar battery 30 becomes a voltage equal to the completion voltage x the number of single cell layers 20.

As described above, the charge control system 50 of the present invention utilizes the characteristic of the bipolar battery 30 of the present invention, in which the charge of the single cell layer 20 is completed when charged up to the completion voltage, and breakage of the single cell layer 20 does not occur even when the single cell layer 20 is charged up to the completion voltage, since the completion voltage is within the tolerance. Therefore, it is not necessary to measure the voltage of every single cell layer 20 in order to judge whether or not all of the single cell layers 20 are charged without variations. Once a certain power is provided by the bipolar battery 30, all of the single cell layers 20 are judged as having been charged without variations, and the charge thereof can be finished.

The charge control system 50 shown in FIG. 14 controls the charge of the bipolar battery 30, but may also control the charge of the assembled battery 40 of the second embodiment.

### (Fourth Embodiment)

A fourth embodiment of the present invention is a vehicle 60 which mounts the bipolar battery 30 of the first embodiment, the assembled battery 40 of the second embodiment, and/or the charge control system 50 of the third embodiment.

By mounting the foregoing bipolar battery 30 or the assembled battery 40 on the vehicle, the vehicle can be provided with a power source from which a stable power can be obtained. Additionally, by mounting the charge control system 50 on the vehicle, the bipolar battery 30 can be adequately charged, preventing overcharge thereof caused by the charge exceeding the tolerance of the voltage of the single cell layer 20. Consequently, the durability of the bipolar battery 30 or the assembled battery 40 can be improved.

The entire content of a Japanese Patent Application No. P2002-336955 with a filing date of November 20, 2002 is herein incorporated by reference.

Although the invention has been described above by reference to certain embodiments of the invention, the invention is not limited to the embodiments described above will occur to these skilled in the art, in light of the teachings. The scope of the invention is defined with reference to the following claims.

## Claims

1. A bipolar battery, comprising:
at least one bipolar electrode (10) in which a positive electrode active material layer (2) is formed on one surface of a collector (1), and a negative electrode active material layer (3) is formed on another surface of the collector (1); and
at least one electrolyte layer (4) placed between the bipolar electrodes (10),
wherein any one of the positive electrode active material layer (2) and the negative electrode active material layer (3) is made of a changeable electrode active material, and the other is made of an unchangeable electrode active material,
the changeable electrode active material is an active material having a characteristic in which, once a maximum charging capacity of the changeable electrode active material is almost reached during charge, a change in voltage of the changeable electrode active material becomes greater than that before the maximum charging capacity thereof is almost reached, and
the unchangeable electrode active material is an active material having a characteristic in which, even when the maximum charging capacity of the changeable electrode active material is almost reached during the charge, a voltage of the unchangeable electrode active material is almost the same as that before the maximum charging capacity of the changeable electrode active material is almost reached.

2. A bipolar battery according to claim 1,
wherein a charging capacity of the unchangeable electrode active material is 110% or more relative to the charging capacity of the changeable electrode active material.

3. A bipolar battery according to claims 1 or 2,
wherein a single cell layer (20) is made of the positive electrode active material layer (2), the electrolyte layer (4) and the negative electrode active material layer (3),
a completion voltage with which the charge of the single cell layer (20) is recognized as completed is decided on the basis of the characteristic of the change in voltage of the changeable electrode active material, and
during the charge, whether or not the charge is completed is judged on the basis of the completion voltage.

4. A bipolar battery according to claim 3,
wherein the changeable electrode active material is spinel lithium manganate included in the positive electrode active material layer (2), and the unchangeable electrode active material is lithium titanate included in the negative electrode active material layer (3), and
the completion voltage is decided within a range from 2.7V to 3.0V.

5. A bipolar battery according to claim 3,
wherein the changeable electrode active material is spinel lithium manganate included in the positive electrode active material layer (2), and the unchangeable electrode active material is graphite included in the negative electrode active material layer (3), and
the completion voltage is decided within a range from 4.2V to 4.5V.

6. A bipolar battery according to claim 3,
wherein the changeable electrode active material is lithium titanate included in the negative electrode active material layer (3), and the unchangeable electrode active material is spinel lithium manganate included in the positive electrode active material layer (2), and
the completion voltage is decided within a range from 2.7V to 3.0V.

7. A bipolar battery according to any of claims 1 through 6,
wherein the electrolyte layer (4) is constituted of a solid polymer electrolyte.

8. An assembled battery, comprising:
a plurality of bipolar battery (30),
the bipolar battery (30), comprising:
at least one bipolar electrode (10) in which a positive electrode active material layer (2) is formed on one surface of a collector (1), and a negative electrode active material layer (3) is formed on another surface of the collector (1); and
at least one electrolyte layer (4) placed between the bipolar electrodes (10),
wherein any one of the positive electrode active material layer (2) and the negative electrode active material layer (3) is made of a changeable electrode active material, and the other is made of an unchangeable electrode active material,
the changeable electrode active material is an active material having a characteristic in which, once a maximum charging capacity of the changeable electrode active material is almost reached during charge, a change in voltage of the changeable electrode active material becomes greater than that before the maximum charging capacity thereof is almost reached, and
the unchangeable electrode active material is an active material having a characteristic in which, even when the maximum charging capacity of the changeable electrode active material is almost reached during the charge, a voltage of the unchangeable electrode active material is almost the same as that before the maximum charging capacity of the changeable electrode active material is almost reached.

9. A charge control system, comprising:
a bipolar battery (30) including at least one bipolar electrode (10) in which a positive electrode active material layer (2) is formed on one surface of a collector (1) and a negative electrode active material layer (3) is formed on another surface of the collector (1), and at least one electrolyte layer (4) placed between the bipolar electrodes (10);
an electric power supply unit (51) which supplies electric power to the bipolar battery (30);
a measuring unit (52) which measures a voltage of the bipolar battery (30) when electric power supply by the electric power supply unit (51) is stopped; and
a control unit (53) which controls the supply or stopping of supply of the electric power by the electric power supply unit (51) on the basis of a measurement result by the measuring unit (52),
wherein any one of the positive electrode active material layer (2) and the negative electrode active material layer (3) is made of a changeable electrode active material, and the other is made of an unchangeable electrode active material,
the changeable electrode active material is an active material having a characteristic in which, once a maximum charging capacity of the changeable electrode active material is almost reached during charge, a change in voltage of the changeable electrode active material becomes greater than that before the maximum charging capacity thereof is almost reached, and
the unchangeable electrode active material is an active material having a characteristic in which, even when the maximum charging capacity of the changeable electrode active material is almost reached during the charge, a voltage of the unchangeable electrode active material is almost the same as that before the maximum charging capacity of the changeable electrode active material is almost reached.

10. A charge control system, comprising:
an assembled battery(40) having a bipolar battery (30) including at least one bipolar electrode (10) in which a positive electrode active material layer (2) is formed on one surface of a collector (1) and a negative electrode active material layer (3) is formed on another surface of the collector (1), and at least one electrolyte layer (4) placed between the bipolar electrodes (10);
an electric power supply unit (51) which supplies electric power to the bipolar battery (30);
a measuring unit (52) which measures a voltage of the bipolar battery (30) when electric power supply by the electric power supply unit (51) is stopped; and
a control unit (53) which controls the supply or stopping of supply of the electric power by the electric power supply unit (51) on the basis of a measurement result by the measuring unit (52),
wherein any one of the positive electrode active material layer (2) and the negative electrode active material layer (3) is made of a changeable electrode active material, and the other is made of an unchangeable electrode active material,
the changeable electrode active material is an active material having a characteristic in which, once a maximum charging capacity of the changeable electrode active material is almost reached during charge, a change in voltage of the changeable electrode active material becomes greater than that before the maximum charging capacity thereof is almost reached, and
the unchangeable electrode active material is an active material having a characteristic in which, even when the maximum charging capacity of the changeable electrode active material is almost reached during the charge, a voltage of the unchangeable electrode active material is almost the same as that before the maximum charging capacity of the changeable electrode active material is almost reached.

11. A charge control system according to claims 9 or 10,
wherein a single cell layer (20) is made of the positive electrode active material layer (2), the electrolyte layer (4) and the negative electrode active material layer (3), and
the control unit (53) judges whether or not the charge is completed on the basis of a completion voltage with which the charge of the single cell layer (20) is recognized as completed, the completion voltage being decided on the basis of the characteristic of the change in voltage of the changeable electrode active material, and
the control unit (53) adjusts a state of charge of each of the single cell layers (20) by controlling the electric power supply unit (51).

12. A charge control system according to claim 11,
wherein the control unit (53) judges whether or not the charge is completed on the basis of a voltage obtained by multiplying the completion voltage by the number of the single cell layers (20) stacked in the bipolar battery (30).

13. A vehicle, comprising:
a bipolar battery (30) including at least one bipolar electrode (10) in which a positive electrode active material layer (2) is formed on one surface of a collector (1), and a negative electrode active material layer (3) is formed on another surface of the collector (1); and at least one electrolyte layer (4) placed between the bipolar electrodes (10),
wherein any one of the positive electrode active material layer (2) and the negative electrode active material layer (3) is made of a changeable electrode active material, and the other is made of an unchangeable electrode active material,
the changeable electrode active material is an active material having a characteristic in which, once a maximum charging capacity of the changeable electrode active material is almost reached during charge, a change in voltage of the changeable electrode active material becomes greater than that before the maximum charging capacity thereof is almost reached, and
the unchangeable electrode active material is an active material having a characteristic in which, even when the maximum charging capacity of the changeable electrode active material is almost reached during the charge, a voltage of the unchangeable electrode active material is almost the same as that before the maximum charging capacity of the changeable electrode active material is almost reached.

14. A vehicle, comprising:
a charge control system (50) comprising:
a bipolar battery (30) including at least one bipolar electrode (10) in which a positive electrode active material layer (2) is formed on one surface of a collector (1) and a negative electrode active material layer (3) is formed on another surface of the collector (1), and at least one electrolyte layer (4) placed between the bipolar electrodes (10);
an electric power supply unit (51) which supplies electric power to the bipolar battery (30);
a measuring unit (52) which measures a voltage of the bipolar battery (30) when electric power supply by the electric power supply unit (51) is stopped; and
a control unit (53) which controls the supply or stopping of supply of the electric power by the electric power supply unit (51) on the basis of a measurement result by the measuring unit (52),
wherein any one of the positive electrode active material layer (2) and the negative electrode active material layer (3) is made of a changeable electrode active material, and the other is made of an unchangeable electrode active material,
the changeable electrode active material is an active material having a characteristic in which, once a maximum charging capacity of the changeable electrode active material is almost reached during charge, a change in voltage of the changeable electrode active material becomes greater than that before the maximum charging capacity thereof is almost reached, and
the unchangeable electrode active material is an active material having a characteristic in which, even when the maximum charging capacity of the changeable electrode active material is almost reached during the charge, a voltage of the unchangeable electrode active material is almost the same as that before the maximum charging capacity of the changeable electrode active material is almost reached.
